(19) Europäisches Patentamt
European Patent Office
Office européen des brevets

(11) **EP 1 906 285 A2**

(12) **EUROPEAN PATENT APPLICATION**

(43) Date of publication:
**02.04.2008 Bulletin 2008/14**

(51) Int Cl.:
**G05B 19/416** $^{(2006.01)}$    **G05B 19/4093** $^{(2006.01)}$

(21) Application number: **07115090.8**

(22) Date of filing: **28.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.09.2006 JP 2006269183**

(71) Applicant: **FANUC LTD**
**Minamitsuru-gun,**
**Yamanashi 401-0597 (JP)**

(72) Inventors:
• **Watanabe, Tooru**
 **Fanuc Dai3virakaramatsu**
 **Minamitsuru-gun, Yamanashi 401-0511 (JP)**
• **Takeuchi, Yasushi**
 **Hino-shi, Tokyo 191-0062 (JP)**
• **Endo, Takahiko**
 **Kokubunji-shi, Tokyo 185-0005 (JP)**

(74) Representative: **Billington, Lawrence Emlyn**
 **Haseltine Lake**
 **Lincoln House, 5th Floor**
 **300 High Holborn**
 **London WC1V 7JH (GB)**

(54) **Numerical controller**

(57) A spindle is subjected to speed control and contour control according to a path table in which the speed and the position of the spindle are stored in association with a time. A switchover command for starting a contour control during speed control and a time La at which the switchover is carried out are set in advance in the path table. When the time La is reached, a spindle speed Sa and a spindle position Xa corresponding to the time La are read. Then, a time Lb and a spindle position Xb for the start of the contour control, designated next, are read. A speed is obtained from the spindle speed Sa and a speed in a first path in the contour control so that the spindle position shifts from Xa to Xb in a period between the times La and Lb. The spindle is moved from the time La to the time Lb at the obtained speed according to a designated linear function.

FIG. 1A

SPINDLE SPEED
(REVOLUTION PER MINUTE)

Sa

La    Lb    Lc                TIME

SPEED CONTROL | CONNECTION CONTROL | CONTOUR CONTROL

EP 1 906 285 A2

FIG. 1B

SPINDLE POSITION
(DEGREE)

Xb

Xa

La    Lb   Lc                                              TIME

| SPEED CONTROL | CONNECTION CONTROL | CONTOUR CONTROL |

**Description**

**BACKGROUND OF THE INVENTION**

Field of the Invention

The present invention relates to a numerical controller in which a memory is provided with a table stored with axis positions corresponding to reference values and path-table operation is performed such that axes are drivingly controlled based on data in the table.

Description of the Related Art

Path-table operation is a known technique described in Japanese Patent Applications Laid-Open Nos. 59-177604 and 2003-303005 (hereinafter referred to as Patent Documents 1 and 2, respectively) and the like. In this path-table operation, positions of controlled axes are previously stored in the form of a table in a memory, corresponding to times, spindle positions, etc., as reference values. The respective positions of the controlled axes are read out corresponding to the reference values from the memory, and the controlled axes are controlled to be situated in the read positions. The path-table operation, in which controlled axes are controlled in synchronism with the reference values based on data stored in the table, is also called electronic cam control. According to this control system, the controlled axes can be accurately controlled with respect to the reference values, and a tool can be freely operated without being restricted by a conventional machining program. Thus, the machining time can be shortened, and the machining accuracy can be improved.

Also described in Patent Document 2 is the way of performing a path-table operation according to the tabulated data in which a type of a path connecting between axis positions specified by a table format data is designated from among a linear function, quadratic function and cubic function, and the controlled axes are controlled such that it moves on the path between the specified positions according to the function thus designated.

In this path-table operation, for starting a contour control at a designated time, it is necessary for the spindle to have reached a rotational position specified in association with the designated time by this designated time, when switching a spindle from speed control to the contour control based on the time as a reference value.

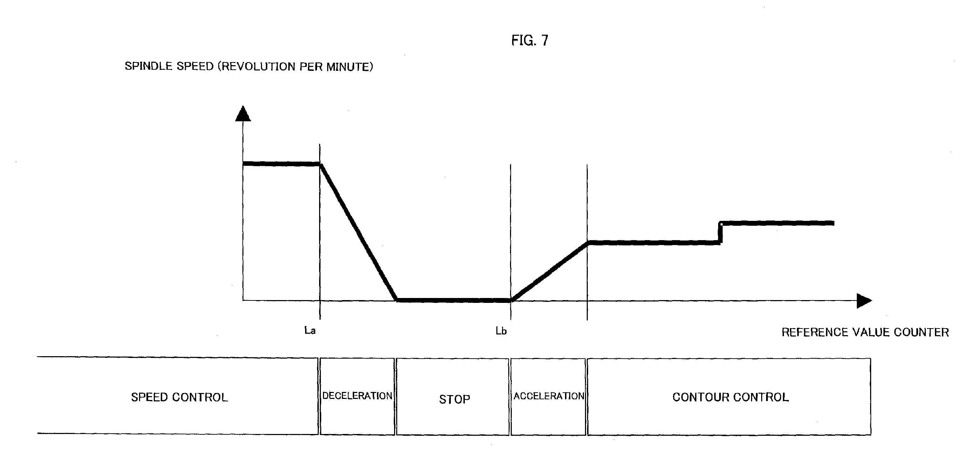

However, the spindle position is indefinite in the speed control, so that the time when the spindle reaches the position for the start of the contour control by the path-table operation is unsettled. In conventional switching from speed control to contour control, therefore, the spindle motion is decelerated and stopped, and thereafter, it is accelerated so that the spindle reaches the contour control starting position when the reference value (time) designated by the tabulated data is reached, as shown in FIG. 7.

According to this method, however, the spindle motion must be decelerated, stopped, and accelerated, so that the machining time is lengthened and energy is consumed wastefully, thus causing a spindle motor to be heated.

**SUMMARY OF THE INVENTION**

Accordingly, the object of the present invention is to provide a numerical controller in which control of a spindle can be switched from speed control to contour control for path-table operation without stopping the spindle.

A numerical controller according to the present invention comprises a memory for storing a path table in which a speed and a position of a spindle are associated with a time serving as a reference, respectively; speed control executing means for reading out the values of the reference and the speeds of the spindle in succession from the path table and controlling the spindle speed in association with the value of the reference; contour control executing means for reading out the values of reference and the positions of the spindle in succession from the path table and controlling the spindle position in association with the value of the reference; position detecting means for detecting a rotational position of the spindle; means for reading out from the path table a command R32 for switchover from speed control to contour control, set for the value La of the reference in the path table prior to the value Lb of the reference for which a start of contour control by the contour control executing means is set, and obtaining from the position detecting means a position Xa of the spindle corresponding to the value La of the reference for which the command R32 for switchover is set; connection spindle speed determination means for determining a speed V for moving the spindle from the obtained position Xa at which the switchover command R32 is set to the position Xb at which the contour control is started, based on a spindle speed Sa obtained when the value La of the reference for which the switchover command R32 is set is reached and a spindle speed Sb at which the contour control is started; and spindle drive means for driving the spindle at the spindle speed determined by the connection spindle speed determination means from the position Xa at which the switchover command R32 is set to the position Xb at which the contour control is started.

The path table may be further stored with information for specifying a function for connecting the spindle position Xa at which the switchover command R32 is set to the position Xb at which the contour control is started, by using a linear function or a multidimensional function. And the spindle drive means may drive the spindle according to the specified function from the value La of the reference for which the switchover command R32 is set to the value Lb of the reference for which a start of contour control is set.

According to the present invention, the control can be switched from speed control to contour control without decelerating and stopping the spindle motion, so that the machining time can be shortened. Since the spindle motion need not be decelerated and stopped, moreover, unfruitful consumption of energy for deceleration, stopping, acceleration to follow, etc. can be prevented, and a spindle motor can be restrained from being heated.

## BRIEF DESCRIPTION OF THE DRAWINGS

The above and other objects and features of the present invention will be obvious from the ensuing description of embodiments with reference to the accompanying drawings, in which:

FIGS. 1A and 1B are diagrams illustrating operating modes in which a path-table operation using a numerical controller of the present invention is shifted from speed control to contour control in a path-table operation;
FIG. 2 is a diagram showing a case where a linear function is used as a connection function for the switchover from speed control to contour control in the numerical controller of the invention;
FIG. 3 is a diagram illustrating a movement amount of a spindle that is moved without being stopped with a linear connection function for the switchover from speed control to contour control in the numerical controller of the invention;
FIG. 4 is a schematic block diagram showing one embodiment of the numerical controller according to the invention;
FIG. 5 shows an example of a path table for the spindle stored in a memory of the numerical controller of the invention;
FIG. 6 is a flowchart showing an algorithm of control processing performed when the numerical controller of the invention shifts from speed control to contour control; and
FIG. 7 is a diagram illustrating operation for switching conventional path-table operation from speed control to contour control.

## DETAILED DESCRIPTION OF THE PREFERRED EMBODIMENTS

The principle of operation of the present invention will be described first.

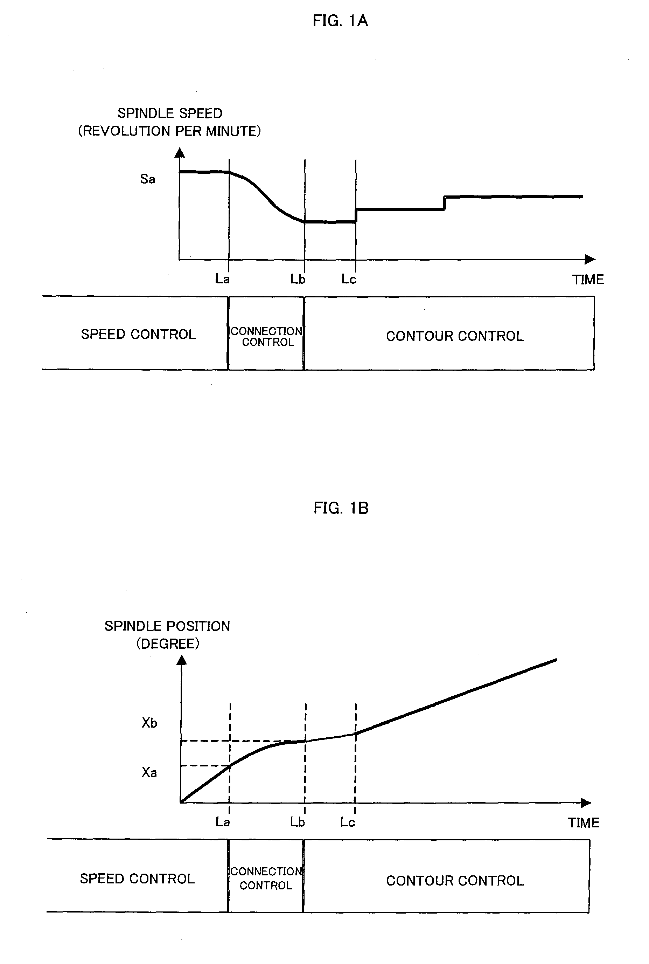

FIGS. 1A and 1B are diagrams illustrating operating modes in which path-table operation according to the present invention is switched from speed control to contour control. In a path table, a command for the switchover from speed control to contour control is given in association with a time La. In this case, time is regarded as a value of reference L.

When the value of reference L reaches La, a spindle position Xa and a spindle speed Sa are read, and a value Lb of reference L for which a next contour control start command in the path table is set and a spindle position Xb for the start of the contour control commanded in association with the command value Lb are read out. Further, a connection function (linear, quadratic, cubic, or some other multidimensional function) that is commanded next is read out.

Control is made so that the spindle moves in accordance with the read connection function as the value of reference L changes from La to Lb, without being decelerated and stopped,

In order that the spindle reaches the position Xb, commanded in the path table, when the value of reference L reaches Lb, the spindle is controlled to move, without being decelerated or stopped, in accordance with the read connection function as the value of reference L changes from La to Lb. That is a feature of the present invention. After the value of reference L reaches Lb, the spindle is drivingly controlled according to the path-table operation for contour control based on data set in the path table, as in the conventional case.

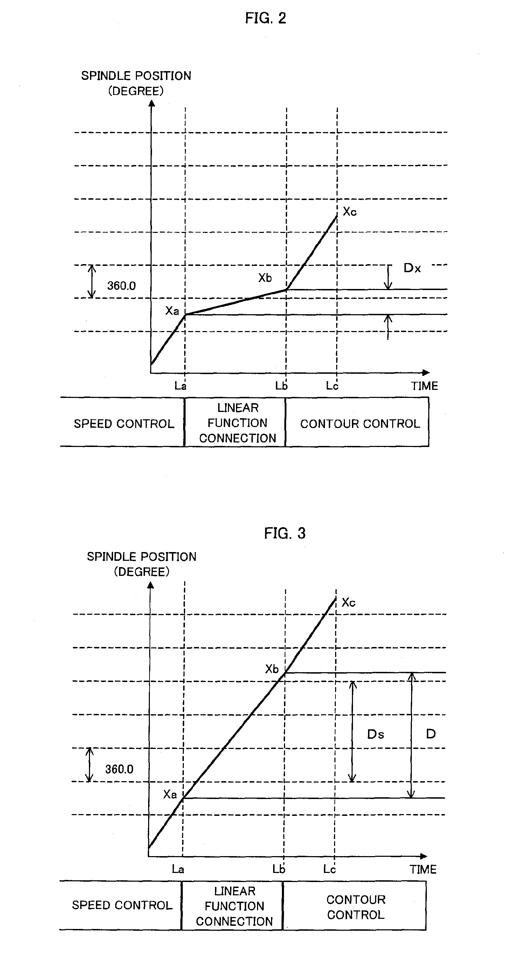

Cases in which the connection function used for the switchover from speed control to contour control is a linear function will now be described with reference to the diagrams of FIGS. 2 and 3.

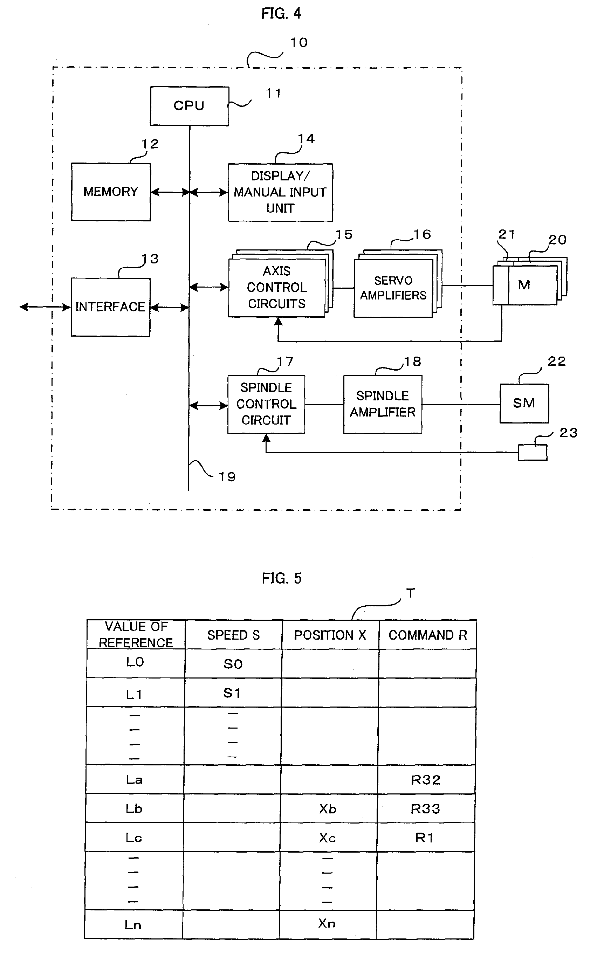

If a command to switch the control from speed control to contour control when value of reference L reaches La is set in the path table, the spindle position Xa attained when the value of reference L reaches the command value La is read by a position/speed detector 23 (FIG. 4). Further, the then spindle speed Sa is read from the spindle speed commanded at this point of time (L = La) or the position/speed detector 23. Further, the next value of reference L = Lb for which a contour control start command is designated by the path table and the spindle position Xb designated in association with the value Lb are read out. Furthermore, a spindle position Xc corresponding to a value Lc of reference L, which is indicative of an end of a first path (moving action) that starts at the starting point of the contour control, is read out. A position X that is read from the position/speed detector 23 is a position within the range of one revolution of the spindle.

First, a difference Dx from the spindle position Xa, in which the command for switchover from speed control to contour control is issued, to the spindle position Xb for the start of contour control is obtained as follows:

$$Dx = Xb - Xa \ (degree). \qquad ....... \ (1)$$

Since connection of a linear function is used in this example, as shown in FIG. 2, the spindle positions Xa and Xb are connected by a straight line.

In order to make this connection without decelerating and stopping the spindle motion, the current spindle speed Sa is approximated to a speed Sb in the first path (moving action) for the contour control, and a speed is obtained such that the spindle position X reaches the designated position Xb when the value of reference L is Lb.

A speed for a section from the spindle position Xb for the value of reference L = Lb after the start of the contour control to the spindle position Xc for the next value of reference L = Lc is determined by the following equation (2):

$$Sb = \{(Xc - Xb)/(Lc - Lb)\} \times (60/360) \ (rpm).$$
$$....... \ (2)$$

Then, an average speed Savg between the current speed Sa and the speed Sb in the first path (between Xc and Xb) for the contour control is obtained as follows:

$$Savg = (Sa + Sb)/2 \ (rpm). \qquad ....... \ (3)$$

Then, a movement amount Dt covered by the average speed Savg for the section from the current position Xa to the position Xb for the start of the contour control is obtained as follows:

$$Dt = Savg \times (360/60) \times (Lb - La) \ (degree).$$
$$....... \ (4)$$

A movement amount for speed maintenance is expected to be an integer multiple of 360 degrees in order to maintain the contour control starting position Xb being a position within the range of one revolution. Therefore, a movement amount Ds equal to an integer multiple of 360 degrees (integer multiple of a rotational frequency unit), rounded with 360 degrees, is obtained according to the following equation:

$$Ds = INT(Dt/360) \times 360 \ (degree). \qquad ....... \ (5)$$

In this equation (5), INT(Dt/360) indicates that the numeric value after the decimal point of value (Dt/360) is discarded.

As shown in FIG. 3, the movement amount Ds is an amount represented by unit of 360 degrees (rotational frequency unit). A movement amount D obtained by adding the movement amount Dx within the range of one revolution of the spindle based on the equation (1) to the movement amount Ds indicates a rotational movement amount of the spindle that moves from the position Xa to Xb at an average speed between the speed Sa for the switchover from speed control to contour control and the speed Sb of the movement in the first path for the contour control:

$$D = Dx + Ds \ (degree). \qquad ....... \ (6)$$

Since the linear function is designated as the connection function in this example, by dividing the movement amount D by a time elapsing from the value of reference L = La for the spindle position (current position) Xa in which the command for switchover from speed control to contour control is issued to the value of reference L = Lb where the position Xb for the start of contour control is commanded, a spindle speed V for this section is obtained as follows:

$$V = D/(Lb - La) \; (degree/sec).  \qquad \ldots\ldots. \; (7)$$

The spindle is driven at the speed V after carrying out interpolation based on the value of reference L from the position Xa (value La of reference) to the position Xb (value Lb of reference). As described in Patent Document 2, position X of each interpolation point is obtained from the value of reference L, as a position corresponding to a value of reference L, by using the following equation (8):

$$X = \{(L - La) \times D/(Lb - La)\} + Xa$$
$$= (L - La) \times V + Xa.  \qquad \ldots\ldots. \; (8)$$

After the value of reference L reaches Lb and the spindle position reaches Xb, the contour control is carried out based on the path table data.

Although a linear function is used for the connection in the example described above, a multidimensional function may be used for the connection. If a quadratic function is used for the connection, as described in Patent Document 2, for example, position X of each interpolation point can be obtained according to the following equation (9):

$$X = (1/2) \times \{(Sb - Sa)/(Lb - La)\} \times (L - La)^2$$
$$+ \, Sa(L - La) + Xa,  \qquad \ldots\ldots. \; (9)$$

where Sb = $\{2 \times D/(Lb - La)\}$ - Sa.

If a cubic function is used for the connection, as described in Patent Document 2, position X of each interpolation point is obtained according to the following equation (10), with speed Sb for the value of reference L = Lb set in advance:

$$X = (1/6) \times \{(Ab - Aa)/(Lb - La)\} \times (L - La)^3$$
$$+ \, (1/2) \times Aa(L - La)^2 + Sa(L - La) + Xa.$$
$$\ldots\ldots. \; (10)$$

Here accelerations Aa and Ab can be obtained under the condition where S = Sb and X = D + Xa when L = Lb.

If a quartic function is used for the connection, position X of each interpolation point is obtained according to the following equation (11), with the value of reference L = Lb and the speed Sb set in advance:

$$X = (1/24) \times \{(Bb - Ba)/(Lb - La)\} \times (L - La)^4$$
$$+ \, (1/6) \times Ba(L - La)^3 + (1/2) \times Aa(L - La)^2$$
$$+ \, Sa(L - La) + Xa.  \qquad \ldots\ldots. \; (11)$$

Here, a jerk Ba for the value of reference L = La and a jerk Bb for the value of reference L = Lb are obtained under the boundary conditions where S = Sb and X = D + Xa when L = Lb.

If a quintic function is used for the connection, moreover, position X of each interpolation point is obtained according to the following equation (12), with speed Sb for the value of reference L = Lb and accelerations Aa and Ab for the values of reference L = La and L = Lb set in advance:

$$X = (1/120) \times \{(Cb - Ca)/(Lb - La)\} \times (L - La)^5$$
$$+ (1/24) \times Ca(L - La)^4 + (1/6) \times Ba(L - La)^3$$
$$+ (1/2) \times Aa(L - La)^2 + Sa(L - La) + Xa.$$
$$\ldots\ldots \quad (12)$$

Here, acceleration variations Ca and Cb for the values of reference L = La and L = Lb and the jerk Ba for the value of reference L = La are obtained under boundary conditions A = Ab, S = Sb and X = D + Xa when L = Lb.

Since the methods for quartic and quintic connections as well as quadratic and cubic connections are described in Japanese Patent Application Serial No. 2006-130513, filed by the applicants of the present application to the Japanese Patent Office on May 19, 2006, a detailed description thereof is omitted here.

An embodiment of the present invention will now be described with reference to the accompanying drawings.

FIG. 4 is a schematic block diagram of a numerical controller 10 according to the present embodiment. Since the configuration of the numerical controller 10 is not particularly different from that of a conventional one, only an outline is shown in FIG. 4.

A processor (CPU) 11 of the numerical controller 10 is connected by a bus 19 with a memory 12, interface 13, display/manual input unit 14, axis control circuits 15, and spindle control circuit 17. The memory 12 is composed of a ROM, RAM, nonvolatile RAM, etc. and is stored with a system program and a machining program. According to the present invention, in particular, the memory 12 is stored with the path table that is loaded with data for path-table operation. The machining program and the path table are externally created and stored into a recording medium (not shown). Then, they are fetched from the recording medium and loaded into the memory 12 through the interface 13. On the other hand, the machining program and the path table data stored in the memory 12 are read out and outputted to an external recording medium through the interface 13.

The display/manual input unit 14 includes a display device, which is composed of a CRT or liquid crystal, and manual input means composed of a keyboard or the like, and is used to input various commands and data.

The axis control circuits 15 are provided individually for feed axes (X-, Y- and Z-axes perpendicular to one another) of a tool. Based on move command amounts from the processor 11 to the individual axes and position/speed feedback signals from axis position/speed detectors 21 that are attached individually to servomotors 20 for the axes, the control circuits 15 perform position feedback control and speed feedback control and cause servo amplifiers 16 for the individual axes to drive the servomotors 20.

In the present embodiment, moreover, a spindle is fitted with the position/speed detector 23 for detecting its rotational position. Based on position and speed feedback signals from the position/speed detector 23 and the move command amounts or speed commands from the processor 11, the spindle control circuit 17 performs position feedback control and speed feedback control and causes a spindle amplifier 18 to drivingly control a spindle motor 22.

FIG. 5 shows an example of a path table T for the spindle, which is set and stored in the memory 12 when the path-table operation is performed according to the present embodiment.

In this embodiment, spindle speed or spindle position is set in association with time which is value of reference L. If a speed S is set in association with a value of reference L in the path table T, speed control is performed based on the path-table operation. If position X is set in association with a value of reference L, on the other hand, position control, or contour control, is performed based on the path-table operation. A command R is a command outputted in association with value of reference L.

In the example shown in FIG. 5, speeds S = S0, S1, ....... are set for the values of reference L = L0, L1, ......., while command R32 is set for the value of reference L = La. The command R32 is a command for starting a switchover from speed control to contour control. Position Xb and command R33 are set for the value of reference L = Lb next to the value of reference L = La for which the command R32 is set. These commands instruct the spindle to reach the position Xb with the value of reference L = Lb, thus instructing the start of contour control with a connection function designated by command R33 at the value of reference L = Lb.

The command R33 is a command that designates a linear function as the connection function so as to control the spindle to operates with the linear function in a section from the values of reference L = La to L = Lb. When controlling the spindle with a quadratic function, cubic function, quartic function, quintic function, ....... , instead of a linear function, commands for designating respective functions such as R332, R333, R 334, R335, ....... , are set.

Further, reference L = Lc next to value of reference L = Lb is a value (time) at which a contour control is started to execute the next command. The end point Xc of the first path after the start of the contour control and R1 for designating a connection function for switchover from speed control to contour control are set for value of reference L = Lc. This R1 is a command that controls the spindle so as to operates with a linear function in a section from value of reference L = Lb to L = Lc. R2, R3, R4, R5 ....... is set for the control with a quadratic function, control with a cubic function, control with quartic function, control for quintic function, ....., instead of a linear function.

After the contour control is started, a spindle position X for contour control for the value of reference L is set individually, and a connection function R that connects the set positions may be set in some cases. Data in the path table T after the start of contour control is identical with the path table data used for the conventional path-table operation. A connection function need not be set in the command R during contour control in the case of path-table operation of a type such that no connection function for each path is to be designated in the conventional contour control. In the case where a connection function for each path during contour control is to be set, connection functions are set individually in advance, as described in Patent Document 2.

Although the illustrated path table T is dedicated to the spindle, moreover, path tables for the feed axes (X-, Y- and Z-axes) that are subjected to the path-table operation in synchronism with the spindle are provided in the same manner as in the conventional case. In these path tables, the respective positions of the feed axes that are run in synchronism with one another are set in association with values of reference. Since this point is shared with the conventional case, a description thereof is omitted here.

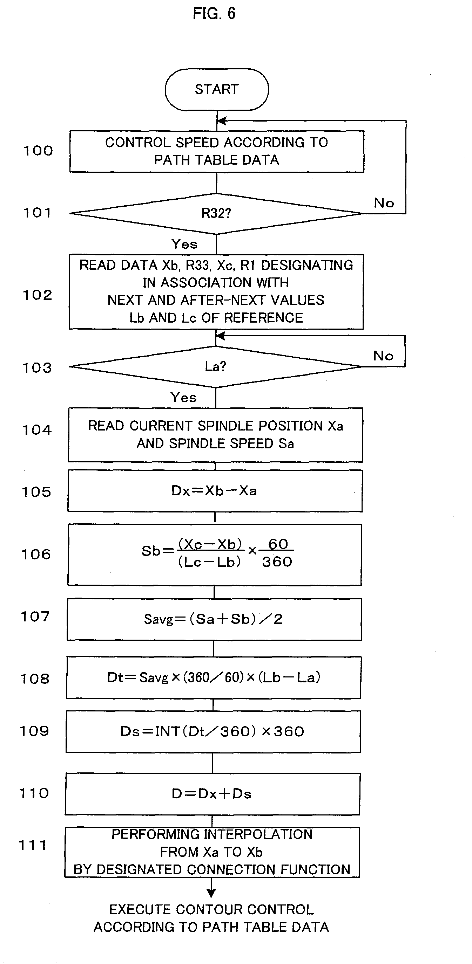

FIG. 6 is a flowchart showing an algorithm of control processing performed when the processor 11 of the numerical controller 10 shifts from speed control in the path-table operation to contour control.

First, as in the conventional case, a value indicative of a time is read from a counter or the like, and speed control for the spindle is performed based on the read value and the data set in the path table (Step 100). Thus, when the time, as the value of reference L, reaches the value set in the path table, the spindle is drivingly controlled at the speed set for the value L. Then, the value of reference L that is set next in the path table T and the data set for this value are read out. If speed data S is set in association with the value of reference L, it is read out and the speed control is continued.

If the next value of reference L and the command R32 (for the start of switchover from speed control to contour control) for this value L are read out (Step 101), on the other hand, next two values of reference L set in the path table T and data set in association with these values L are read. If the value of reference L = La for which the command R32 is set is read out, in the example of the path table T shown in FIG. 5, the next value of reference L = Lb, the spindle position Xb set for the value Lb, and the command R33 (for the start of contour control) are read. Further, the next value of reference L = Lc, the spindle position Xc set for the value Lc, and the command R1 are read (Step 102). R33 is a command indicative of connection of La and Lb with a linear function, and R1 is a command indicative of connection of Lb and Lc with a linear function.

Waiting a value in the counter that indicates the value of reference L (time) to reach the value La for which the switching command R32 is set (Step 103), and when L = La is reached, the spindle position Xa for the value La is determined by a feedback signal from the position/speed detector 23. Further, the commanded spindle speed Sa for the value La is obtained from the path table T (or from the speed outputted from the position/speed detector 23) and stored (Step 104).

Then, the rotational angle Dx from the position Xa corresponding to the value of reference L = La for the switching command R32 to the position Xb corresponding to the value of reference L = Lb for which a start of contour control is set by the command R33 is obtained according to the aforesaid equation (1) (Step 105).

Subsequently, the spindle speed Sb in the first path (movement from the spindle position Xb corresponding to the value of reference L = Lb for the start of contour control to the spindle position Xc corresponding to the value of reference L = Lc designated next) after the start of contour control is obtained. Specifically, the operation of the equation (2) is performed in the aforesaid manner to obtain the spindle speed Sb that is converted into a rotational frequency of the spindle per minute (Step 106).

The average speed Savg between the current speed Sa and the speed Sb in the first path for the contour control is obtained according to the equation (3) (Step 107) .

Further, the movement amount Dt of the spindle that moves at the average speed Savg in the section from the value of reference L = La for the switching command R32 to the value of reference L = Lb for which a start of contour control is set by R33 is determined by performing the operation of the equation (4) (Step 108), and the operation of the equation (5) is performed using the determined movement amount Dt to obtain the movement amount Ds of the spindle that is equal to an integer multiple of the rotational frequency unit (Step 109).

The movement amount Dx within the range of one revolution of the spindle obtained in Step 105 is added to the movement amount Ds of the spindle obtained in this manner, whereby the movement amount D (= Dx + Ds) for moving the spindle from the contour control switching command position Xa during the speed control to the contour control starting position Xb, within the range of one revolution of the spindle, is obtained (Step 110).

Then, interpolation processing is executed with a designated connection function (Step 111) based on a command for designating the connection function for switchover from speed control to contour control read in Step 102. Since the command R33 (linear function) is designated in this embodiment, the operation of the equation (8) is performed, and the rotational position X of the spindle is obtained by carrying out interpolation based on the value of reference L (time). The move command amount for the spindle is obtained from the spindle position X and outputted to the spindle control circuit 17, whereby the spindle motor 22 is driven.

Thereafter, contour control is performed by table operation based on the data set in the path table.

The spindle position X for the value of reference L is obtained according to the equation (9) if a quadratic function is designated by a connection function command R332 in Step 111, according to the equation (10) if a cubic function is designated by R333, according to the equation (11) if a quartic function is designated by R334, or according to the equation (12) if a quintic function is designated by R335. A movement amount is determined by this spindle position and outputted to the spindle control circuit 17.

**Claims**

1. A numerical controller comprising:

   a memory for storing a path table in which a speed and a position of a spindle are associated with a time serving as a reference, respectively;
   speed control executing means for reading out the values of the reference and the speeds of the spindle in succession from the path table and controlling the spindle speed in association with the value of the reference;
   contour control executing means for reading out the values of reference and the positions of the spindle in succession from the path table and controlling the spindle position in association with the value of the reference;
   position detecting means for detecting a rotational position of the spindle;
   means for reading out from the path table a command R32 for switchover from speed control to contour control, set for the value La of the reference in the path table prior to the value Lb of the reference for which a start of contour control by the contour control executing means is set, and obtaining from the position detecting means a position Xa of the spindle corresponding to the value La of the reference for which the command R32 for switchover is set;
   connection spindle speed determination means for determining a speed V for moving the spindle from the obtained position Xa at which the switchover command R32 is set to the position Xb at which the contour control is started, based on a spindle speed Sa obtained when the value La of the reference for which the switchover command R32 is set is reached and a spindle speed Sb at which the contour control is started; and
   spindle drive means for driving the spindle at the spindle speed determined by the connection spindle speed determination means from the position Xa at which the switchover command R32 is set to the position Xb at which the contour control is started.

2. The numerical controller according to claim 1, wherein the path table is further stored with information for specifying a function for connecting the spindle position Xa at which the switchover command R32 is set to the position Xb at which the contour control is started, by using a linear function or a multidimensional function, and
   the spindle drive means drives the spindle according to the specified function from the value La of the reference for which the switchover command R32 is set to the value Lb of the reference for which a start of contour control is set.

3. The numerical controller according to claim 1, wherein the connection spindle speed determination means drives the spindle at a fixed speed V given by the following equation from the position Xa at which the switchover command R32 is set to the position Xb at which the contour control is started:

$$V = \{Dx + INT[Savg \times t/60] \times 360\}/t,$$

   where Dx is a movement amount (degree) within the range of one revolution of the spindle from the spindle position Xa at which the switchover command R32 is set to the position Xb at which the contour control is started, INT[ ] indicates that the numeric value after the decimal point of value within [ ] is discarded, Savg is an average between the spindle speed (revolution per minute) Sa corresponding to the value La of the reference for which the switchover command R32 is set and the spindle speed (revolution per minute) Sb at which the contour control is started, and t is a time (second) elapsing from the time (the value of the reference) at which a command for switchover from speed control to contour control is set to the time (the value of the reference) at which the start of contour control is set.

## FIG. 1A

## FIG. 1B

## FIG. 2

## FIG. 3

FIG. 4

FIG. 5

| VALUE OF REFERENCE | SPEED S | POSITION X | COMMAND R |
|---|---|---|---|
| L0 | S0 | | |
| L1 | S1 | | |
| — — — — | — — — — | | |
| La | | | R32 |
| Lb | | Xb | R33 |
| Lc | | Xc | R1 |
| — — — — | | — — — — | |
| Ln | | Xn | |

12

FIG. 6

```
                    ┌─────────┐
                    │  START  │
                    └─────────┘
                         │
          ┌──────────────────────────────────┐
  100     │  CONTROL SPEED ACCORDING TO      │◄───────┐
          │       PATH TABLE DATA            │        │
          └──────────────────────────────────┘        │
                         │                             │
  101              ◄─────┴─────►     No                │
                       R32?      ───────────────────────┘
                         │
                        Yes
          ┌──────────────────────────────────┐
          │  READ DATA Xb, R33, Xc, R1 DESIGNATING │
          │        IN ASSOCIATION WITH        │
  102     │     NEXT AND AFTER-NEXT VALUES    │
          │      Lb AND Lc OF REFERENCE       │
          └──────────────────────────────────┘
                         │                             │
  103              ◄─────┴─────►     No                │
                       La?       ───────────────────────┘
                         │
                        Yes
          ┌──────────────────────────────────┐
  104     │  READ CURRENT SPINDLE POSITION Xa │
          │      AND SPINDLE SPEED Sa         │
          └──────────────────────────────────┘
                         │
          ┌──────────────────────────────────┐
  105     │            Dx=Xb−Xa              │
          └──────────────────────────────────┘
                         │
          ┌──────────────────────────────────┐
  106     │                                  │
          └──────────────────────────────────┘
                         │
          ┌──────────────────────────────────┐
  107     │         Savg=(Sa+Sb)/2           │
          └──────────────────────────────────┘
                         │
          ┌──────────────────────────────────┐
  108     │    Dt=Savg×(360/60)×(Lb−La)      │
          └──────────────────────────────────┘
                         │
          ┌──────────────────────────────────┐
  109     │       Ds=INT(Dt/360)×360         │
          └──────────────────────────────────┘
                         │
          ┌──────────────────────────────────┐
  110     │             D=Dx+Ds             │
          └──────────────────────────────────┘
                         │
          ┌──────────────────────────────────┐
          │    PERFORMING INTERPOLATION       │
  111     │         FROM Xa TO Xb            │
          │ BY DESIGNATED CONNECTION FUNCTION │
          └──────────────────────────────────┘
                         │
                         ▼
```

$$106 \quad Sb = \frac{(Xc-Xb)}{(Lc-Lb)} \times \frac{60}{360}$$

EXECUTE CONTOUR CONTROL
ACCORDING TO PATH TABLE DATA

FIG. 7

SPINDLE SPEED (REVOLUTION PER MINUTE)

REFERENCE VALUE COUNTER

La

Lb

SPEED CONTROL

DECELERATION

STOP

ACCELERATION

CONTOUR CONTROL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59177604 A
- JP 2003303005 A

- JP 2006130513 A